(19) Europäisches Patentamt
European Patent Office
Office européen des brevets

(11) **EP 3 147 491 A1**

(12) **DEMANDE DE BREVET EUROPEEN**

(43) Date de publication:
**29.03.2017 Bulletin 2017/13**

(21) Numéro de dépôt: **16190214.3**

(22) Date de dépôt: **22.09.2016**

(51) Int Cl.:
*F02M 26/05* (2016.01)   *F02M 26/06* (2016.01)
*F02D 41/00* (2006.01)   *B60W 30/19* (2012.01)
*F02D 41/14* (2006.01)   *F02D 41/02* (2006.01)
*F02D 41/06* (2006.01)   *F02D 41/18* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **23.09.2015   FR 1558977**

(71) Demandeur: **Renault S.A.S.**
**92100 Boulogne-Billancourt (FR)**

(72) Inventeurs:
• **TALON, Vincent**
**69007 LYON (FR)**
• **Castillo, Felipe**
**38000 GRENOBLE (FR)**

(54) **PROCÉDÉ DE COMMANDE D'UN MOTEUR À COMBUSTION INTERNE DE VÉHICULE AUTOMOBILE**

(57) Procédé de commande d'un moteur à combustion interne de véhicule automobile muni de circuits de recirculation partielle des gaz d'échappement à haute pression et à basse pression, au cours duquel on détermine la fraction d'air frais dans le collecteur d'admission et on détermine une estimation de la fraction d'air frais en amont du papillon d'admission

Le procédé comprend les étapes suivantes :
on détermine une consigne de fraction d'air frais,
on détermine la fraction de gaz frais dans le collecteur d'échappement par mesure d'une sonde de richesse à l'échappement,
on détermine si la consigne de fraction d'air frais et si l'estimation de la fraction d'air frais en amont du papillon d'admission sont supérieures à la fraction de gaz frais dans le collecteur d'échappement,
si tel n'est pas le cas, on commande la fermeture du circuit de recirculation partielle des gaz d'échappement à haute pression,
si tel est le cas, on détermine une erreur de contrôle en soustrayant la consigne de fraction d'air frais de la fraction estimée d'air frais dans le collecteur d'admission,
on estime le débit du circuit de recirculation partielle des gaz d'échappement à haute pression fonction de l'erreur de contrôle, d'un gain, d'une mesure de débit d'air, de la consigne de fraction d'air frais, de la fraction estimée d'air frais, de la fraction de gaz frais dans le collecteur d'échappement et de l'estimation de la fraction d'air frais en amont du papillon d'admission.

## FIGURE UNIQUE

**Description**

L'invention a pour domaine technique le contrôle des moteurs à combustion interne, et notamment un tel contrôle lors de phases de fonctionnement transitoires.

Les normes de dépollution obligent les constructeurs automobiles à concevoir des moteurs de plus en plus performants équipés de systèmes d'air de plus en plus évolués. Une solution consiste à introduire une recirculation des gaz d'échappement EGR (acronyme anglophone pour « exhaust gaz recirculation ») vers l'admission. Ces gaz sont inertes vis-à-vis de la combustion de sorte que lors de la combustion, ces gaz sont chauffés sans se dégrader. Ceci permet d'emmagasiner une partie de la chaleur et donc de diminuer la température des gaz dans la chambre de combustion. Cet abaissement de température a pour conséquence la diminution d'oxydes d'azote NOx formés, l'une des principales espèces de polluant.

Dans les phases de fonctionnement d'un moteur fortement transitoires, notamment dans les phases de changement de rapport, la chaîne d'alimentation en air est mal contrôlée. Dans ces zones, l'injection de carburant est coupée afin d'annuler le couple perçu par l'embrayage durant son ouverture et fermeture. Le débit du circuit d'EGR (haute et basse pression) est également coupé ou minimisé afin de ne pas désamorcer la veine gazeuse, c'est-à-dire le conduit dans lequel circulent les gaz d'échappement EGR, afin d'éviter un excès d'EGR dans les cylindres durant la phase de redémarrage. Avec cette approche, le risque de ne pouvoir redémarrer la combustion par manque d'oxygène est évité. Cependant, en phase de démarrage, l'injection se fait sans ou avec peu d'EGR, en ayant comme conséquence de hauts niveaux de production d'oxydes d'azote NOx.

Sur certaines applications, on demande en boucle ouverte un forfait d'ouverture de la vanne du circuit d'EGR afin de ne pas désamorcer la veine gazeuse. Cette valeur prédéterminée est calibrée lors de la mise au point du moteur et dépend des points de fonctionnement (vitesse de rotation, couple). Mais cette solution ne garantit pas un contrôle réel de l'EGR dans ces phases. La production d'oxydes d'azote NOx devient particulièrement importante dans les phases fortement transitoires ou lors de changements de rapport.

Il existe un besoin d'une meilleure régulation de la composition des gaz admis dans les cylindres en évitant des problèmes de démarrage de la combustion et en optimisant la réduction d'émissions d'oxydes d'azotes NOx.

L'invention a pour objet un procédé de commande d'un moteur à combustion interne de véhicule automobile muni d'un circuit de recirculation partielle des gaz d'échappement à haute pression et d'un circuit de recirculation partielle des gaz d'échappement à basse pression, comprenant une étape au cours de laquelle on détermine la fraction d'air frais dans le collecteur d'admission et on détermine une estimation de la fraction d'air frais en amont du papillon d'admission.

Le procédé comprend les étapes suivantes :

on détermine une consigne de fraction d'air frais,

on détermine la fraction de gaz frais dans le collecteur d'échappement par mesure d'une sonde de richesse à l'échappement,

on détermine si la consigne de fraction d'air frais est supérieure à la fraction de gaz frais dans le collecteur d'échappement et si l'estimation de la fraction d'air frais en amont du papillon d'admission est supérieure à la fraction de gaz frais dans le collecteur d'échappement,

si tel n'est pas le cas, on commande la fermeture du circuit de recirculation partielle des gaz d'échappement à haute pression,

si tel est le cas, on détermine une erreur de contrôle en soustrayant la consigne de fraction d'air frais de la valeur estimée de la fraction d'air frais dans le collecteur d'admission,

puis on estime le débit du circuit de recirculation partielle des gaz d'échappement à haute pression fonction de l'erreur de contrôle, d'un gain, d'une mesure de débit d'air, de la consigne de fraction d'air frais, de la valeur estimée de la fraction d'air frais dans le collecteur d'admission, de la fraction de gaz frais dans le collecteur d'échappement et de l'estimation de la fraction d'air frais en amont du papillon d'admission et on commande le circuit de recirculation partielle des gaz d'échappement à haute pression pour qu'il délivre le débit estimé.

D'autres buts, caractéristiques et avantages de l'invention apparaîtront à la lecture de la description suivante, donnée uniquement à titre d'exemple non limitatif et faite en référence au dessin annexé sur lequel la figure unique illustre les principales étapes du procédé de commande selon l'invention.

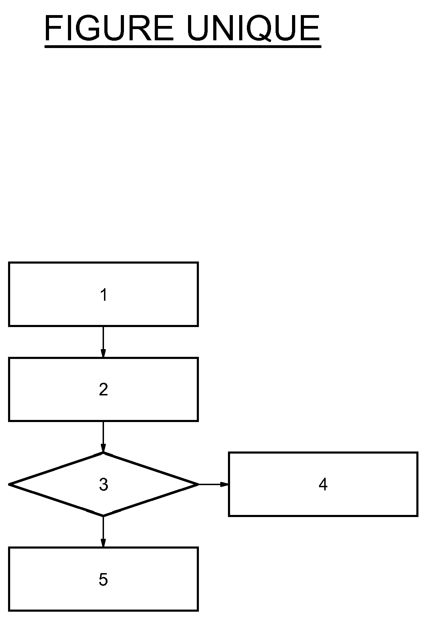

La principale difficulté du contrôle de la fraction d'air frais réside dans le besoin de connaître précisément la fraction de gaz brûlés dans le collecteur d'admission. Pour déterminer cela, on emploie l'observateur de la composition des gaz d'admission décrit dans le document FR2973441.On se référera plus particulièrement à la description détaillée de la figure 2, qui expose la construction de l'estimateur de la composition des gaz d'admission à partir de l'estimation des débits de gaz d'échappement EGR (observateur à mode glissant) et de la concaténation des informations pour observer la fraction des gaz frais dans le collecteur d'admission (observateur de type « paramètre variant »).

Cet observateur de la fraction d'air frais Fcol dans le collecteur d'admission utilise les mesures de pression dans le collecteur d'admission Pcol, de température dans le collecteur admission Tcol, de débit d'air Qair, de débit egr à haute pression Qegrh, et de richesse à l'échappement Favt.

On rappelle qu'un circuit EGR à haute pression relie le collecteur d'échappement en amont de la turbine d'un turbocompresseur au collecteur d'admission en aval du compresseur.

Le document FR2973441 divulgue également une prise en compte du retard dans le transport des gaz d'échappement par un circuit d'EGR à basse pression.

On rappelle qu'un circuit EGR à basse pression relie l'échappement en aval de la turbine d'un turbocompresseur à l'admission d'air frais en amont du compresseur.

La prise en compte du retard de transport de l'EGR basse pression est une vraie différence par rapport aux estimations purement statiques. En effet toute la dynamique de l'estimateur de NOx réside dans l'observation du taux de gaz brûlés dans le collecteur d'admission qui dépend de la connaissance de la quantité d'EGR dans les gaz admis. Le couplage entre estimation de Fcol et NOx en statique permet d'avoir des performances tout à fait remarquables aussi bien sur des points de fonctionnement stabilisés que sur des points de fonctionnement transitoires, notamment sur les nouveaux cycles de dépollution. Cette application est aussi parfaitement transposable au moteur simple ou double suralimentation.

La calibration de cet estimateur est assez simple car tout le processus est effectué lors de la mise au point. En effet, les seuls paramètres à renseigner pour calibrer cet observateur sont les grandeurs géométriques de la chaîne d'air du moteur à l'étude et une constante qui règle la vitesse de convergence.

Le procédé de commande décrit ci-dessous permet de ne plus couper le débit du circuit d'EGR à haute pression, durant les phases de changement de rapport, car il permet de modifier très rapidement la fraction d'air frais dans le collecteur d'admission, ce qui permet de réduire les émissions d'oxydes d'azote NOx. Par ailleurs, on conserve le débit du circuit d'EGR à basse pression à une valeur nulle ou minimale afin de ne pas rompre la veine gazeuse durant les phases de changement de rapport. Cela est dû à la très lente vitesse de réponse du circuit BP pour être effective dans cette typologie d'application.

Pour contrôler la fraction d'air frais dans le collecteur d'admission, on se base sur l'équation dynamique suivante :

$$\dot{F}_{col} = \frac{RT_{col}}{p_{col}V_{col}}\left(Q_{air}\hat{F}_{ape} + Q_{EGRH}F_{avt} - \left(Q_{air} + Q_{EGRH}\right)F_{col}\right) \qquad (Eq.\ 1)$$

Avec

$\hat{F}_{ape}$ : estimation de la fraction d'air frais en amont du papillon d'admission (décrit dans le document FR2973441, plus particulièrement page 7, ligne 25),

Qair : mesure de débit d'air,

Qegrh : mesure de débit du circuit d'EGR à haute pression,

Favt : fraction de gaz frais dans le collecteur d'échappement mesuré par la sonde de richesse ou estimé par un autre moyen,

Tcol : mesure de température dans le collecteur d'admission,

Pcol : mesure de pression dans le collecteur d'amission,

Vcol : volume du collecteur d'admission, et

R : constante des gaz parfaits.

On définit la fraction d'air frais souhaité durant le changement de rapport $F_{colSP}$. Cela représente la fraction d'air frais qui minimise les émissions de NOx et assure le démarrage de la combustion.

On définit l'erreur de contrôle de la façon suivante :

$$e_{col} = F_{col} - F_{colSP} \qquad (Eq.\ 2)$$

Afin d'obtenir le meilleur contrôle possible, on souhaite faire converger à zéro l'erreur de contrôle $e_{col}$. Pour obtenir cela, on définit la dynamique de l'erreur :

$$\dot{e}_{col} = \frac{RT_{col}}{p_{col}V_{col}}\left(-\left(Q_{air} + Q_{EGRH}\right)e_{col} + F_{avt}Q_{EGRH} + Q_{air}\hat{F}_{ape} - \left(Q_{air} + Q_{EGRH}\right)F_{colSP}\right)$$

$$(Eq.\ 3)$$

Notez que l'équation 3 est difficile à contrôler parce qu'elle varie avec le temps et présente une non linéarité dépendant de l'erreur de contrôle $e_{col}$.

Pour gérer la complexité de cette équation, on utilise des stratégies de contrôle avancées qui permettent d'assurer la convergence du système pour toutes les conditions d'opération du moteur. Plus précisément on va utiliser la commande linéaire à paramètres variant LPV (acronyme anglophone pour « Linéaire Paramètres Variants »).

L'équation 3 peut se récrire sous forme LPV en appliquant la définition suivante pour le débit du circuit d'EGR à haute pression.

$$Q_{EGRH} = \frac{\left(\hat{F}_{ape} - F_{colSP}\right)}{\left(F_{colSP} - F_{avt}\right)}Q_{air} + u_v$$

$$(Eq.\ 4)$$

Avec $u_v$ : une entrée de contrôle virtuel.

En combinant l'équation 3 et l'équation 4, on obtient le système LPV suivant.

$$\dot{e}_{col} = A(\rho)e_{col} + B(\rho)u_v$$

$$(Eq.\ 5)$$

Avec :

$$\rho = \left[\rho_1, \rho_2\right],$$

$$\rho_1 = -\frac{RT_{col}}{p_{col}V_{col}}\left(Q_{air} + Q_{EGRH}\right),$$

$$\rho_2 = \frac{RT_{col}}{p_{col}V_{col}}F_{avt},$$

$$A(\rho) = \rho_1,$$

et

$$B(\rho) = \rho_2.$$

Avec les extrémités des paramètres $\rho_1$ et $\rho_2$ on crée un polytope, un espace convexe de paramètres, permettant de synthétiser un contrôleur de la forme :

$$u_v = K_{cr} e_{col} \qquad\qquad (Eq.\ 6)$$

Avec :

$K_{cr}$: gain constant qui assure la convergence de $e_{col}$ dans le polytope défini.
Le gain $K_{cr}$ est calculé avec les inégalités linéaires matricielles (LMI) suivantes :

$$A_i \cdot P + P \cdot A_i^T + B_i \cdot Y + Y_u^T \cdot B_i^T + I < 0$$
$$\begin{bmatrix} X & R_u^{1/2} \cdot Y \\ Y^T \cdot R_u^{1/2} & P \end{bmatrix} > 0$$
$$\min_{P,X,Y} \{Tr(QP) + Tr(X)\}$$
$$P > 0$$
$$K_{cr} = Y \cdot P^{-1} \qquad\qquad (Eq.\ 7)$$

Où l'index i représente l'évaluation d'une matrice dans le sommet du polytope i.
Le système d'équations 7 permet de minimiser la fonction de coût suivante :

$$J = \int \left(e_{col}^2 Q + u_v^2 R_u\right) dt \qquad\qquad (Eq.\ 8)$$

Le débit du circuit d'EGR à haute pression est donc défini de la façon suivante :

$$Q_{EGRH} = \frac{\left(\hat{F}_{ape} - F_{colSP}\right)}{\left(F_{colSP} - F_{avt}\right)} Q_{air} + K_{cr} e_{col} \qquad\qquad (Eq.\ 9)$$

Le débit du circuit d'EGR à haute pression doit respecter les contraintes suivantes afin d'être cohérent physiquement.

$$\begin{cases} F_{colSP} > F_{avt} \\ \hat{F}_{ape} > F_{avt} \end{cases} \qquad\qquad (Eq.\ 10)$$

Si les contraintes Eq. 10 ne sont pas satisfaites, la consigne de Fcol n'est pas atteignable. On annule le débit du circuit d'EGR à haute pression.
Il est à noter que l'équation Eq. 9 donnant le débit du circuit d'EGR à haute pression comprend une commande en boucle ouverte correspondant au premier terme $\dfrac{\left(\hat{F}_{ape} - F_{colSP}\right)}{\left(F_{colSP} - F_{avt}\right)} Q_{air}$ et une commande en boucle fermée qui correspond au second terme $K_{cr} e_{col}$.
Le procédé de commande associé comprend les étapes suivantes, illustrées par la figure unique.
Lors d'une première étape 1, on détermine la fraction d'air frais Fcol dans le collecteur d'admission en appliquant l'estimateur décrit dans le document FR2973441, et on détermine l'estimation $F_{ape}$ de la fraction d'air frais en amont du papillon d'admission en appliquant l'estimateur également décrit dans le document FR2973441.
Lors d'une deuxième étape 2, on détermine la consigne de fraction d'air frais FcolSP. Cette consigne peut être issue d'une cartographie à deux dimensions, dépendant du régime du moteur et de la charge du moteur, par exemple le couple de consigne. Une telle cartographie peut être précalibrée au banc moteur en fonction des objectifs d'émission d'oxydes d'azote et de particules du moteur. Ainsi, pour chaque point de fonctionnement régime-charge du moteur, on détermine une valeur optimale de consigne de fraction d'air frais permettant de répondre aux objectifs de dépollution.

Lors d'une troisième étape 3, on détermine si les contraintes de l'équation Eq. 10 sont satisfaites, en fonction de la mesure de la sonde de richesse à l'échappement.

Si tel n'est pas le cas, on commande la fermeture du circuit d'EGR à haute pression Lors d'une quatrième étape 4.

Si les contraintes de l'équation Eq. 10 sont satisfaites, le procédé se poursuit par une cinquième étape 5, au cours de laquelle on détermine l'erreur de contrôle $e_{col}$ puis on estime le débit du circuit d'EGR à haute pression en appliquant l'équation Eq. 9 et on commande le circuit d'EGR à haute pression pour qu'il délivre le débit estimé.

Avec l'estimation de la fraction d'air frais dans le collecteur d'admission, le procédé de commande de type mixte (en boucle ouverte et fermée) permet de contrôler la fraction d'air frais dans le collecteur d'admission avant et durant les phases de démarrage, en permettant la réduction des émissions NOx durant les phases de fort transitoire et de changement de rapport, tout en fixant une fraction d'air frais suffisamment élevée pour assurer la combustion.

## Revendications

1. Procédé de commande d'un moteur à combustion interne de véhicule automobile muni d'un circuit de recirculation partielle des gaz d'échappement à haute pression et d'un circuit de recirculation partielle des gaz d'échappement à basse pression, comprenant une étape au cours de laquelle on détermine la fraction d'air frais dans le collecteur d'admission et on détermine une estimation de la fraction d'air frais en amont du papillon d'admission **caractérisé par le fait qu'**il comprend les étapes suivantes :

   on détermine une consigne de fraction d'air frais,
   on détermine la fraction de gaz frais dans le collecteur d'échappement par mesure d'une sonde de richesse à l'échappement,
   on détermine si la consigne de fraction d'air frais est supérieure à la fraction de gaz frais dans le collecteur d'échappement et si l'estimation de la fraction d'air frais en amont du papillon d'admission est supérieure à la fraction de gaz frais dans le collecteur d'échappement,
   si tel n'est pas le cas, on commande la fermeture du circuit de recirculation partielle des gaz d'échappement à haute pression,
   si tel est le cas, on détermine une erreur de contrôle en soustrayant la consigne de fraction d'air frais de la valeur estimée de la fraction d'air frais dans le collecteur d'admission,
   puis on estime le débit du circuit de recirculation partielle des gaz d'échappement à haute pression fonction de l'erreur de contrôle, d'un gain, d'une mesure de débit d'air, de la consigne de fraction d'air frais, de la valeur estimée de la fraction d'air frais dans le collecteur d'admission, de la fraction de gaz frais dans le collecteur d'échappement et de l'estimation de la fraction d'air frais en amont du papillon d'admission et on commande le circuit de recirculation partielle des gaz d'échappement à haute pression pour qu'il délivre le débit estimé.

# FIGURE UNIQUE

Europäisches
Patentamt

European
Patent Office

Office européen
des brevets

# RAPPORT DE RECHERCHE EUROPEENNE

Numéro de la demande

EP 16 19 0214

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 979 389 A1 (RENAULT SA [FR]) 1 mars 2013 (2013-03-01) * abrégé; figure 1 * * page 10, ligne 28 - page 12, ligne 5 * ----- | 1 | INV. F02M26/05 F02M26/06 F02D41/00 B60W30/19 |
| A,D | FR 2 973 441 A1 (RENAULT SAS [FR]) 5 octobre 2012 (2012-10-05) * le document en entier * ----- | 1 | F02D41/14<br><br>ADD. F02D41/02 |
| A | EP 2 290 209 A2 (INT ENGINE INTELLECTUAL PROP [US]) 2 mars 2011 (2011-03-02) * abrégé; figures 3,4 * * alinéa [0012] * ----- | 1 | F02D41/06 F02D41/18 |
| A | WO 2012/085443 A1 (RENAULT SA [FR]; FONTVIEILLE LAURENT [FR]; PETILLON YOHANN [FR]; MOULI) 28 juin 2012 (2012-06-28) * abrégé; figure 1 * ----- | 1 | |
| A | WANG ET AL: "Air fraction estimation for multiple combustion mode diesel engines with dual-loop EGR systems", CONTROL ENGINEERING PRACTICE, PERGAMON PRESS, OXFORD, GB, vol. 16, no. 12, 1 décembre 2008 (2008-12-01), pages 1479-1486, XP024529877, ISSN: 0967-0661, DOI: 10.1016/J.CONENGPRAC.2008.04.007 [extrait le 2008-06-10] * le document en entier * ----- | 1 | DOMAINES TECHNIQUES RECHERCHES (IPC)<br><br>F02M F02D B60W |
| A | US 2014/261350 A1 (RUTH MICHAEL J [US] ET AL) 18 septembre 2014 (2014-09-18) * abrégé; figure 1 * ----- | 1 | |
| | -/-- | | |

Le présent rapport a été établi pour toutes les revendications

| Lieu de la recherche | Date d'achèvement de la recherche | Examinateur |
|---|---|---|
| Munich | 24 janvier 2017 | Mineau, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 16 19 0214

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 2 811 140 A1 (RENAULT SA [FR]) 10 décembre 2014 (2014-12-10) * le document en entier * ----- | 1 | |
| A | BESSAI C ET AL: "VIRTUELLER SAUERSTOFF-SENSOR IM EINLASSKRÜMMER EINES DIESELMOTORS", MTZ, SPRINGER, vol. 72, no. 11, 1 novembre 2011 (2011-11-01), pages 874-880, XP001569845, ISSN: 0024-8525, DOI: 10.1365/S35146-011-0189-X * page 5 - page 6 * ----- | 1 | |
| A | EP 2 397 676 A1 (HONDA MOTOR CO LTD [JP]) 21 décembre 2011 (2011-12-21) * abrégé; figures 1-31 * ----- | 1 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 24 janvier 2017 | Mineau, Christophe |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 19 0214

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-01-2017

| Document brevet cité au rapport de recherche | Date de publication | Membre(s) de la famille de brevet(s) | Date de publication |
|---|---|---|---|
| FR 2979389 A1 | 01-03-2013 | EP 2751416 A1<br>ES 2563155 T3<br>FR 2979389 A1<br>WO 2013030471 A1 | 09-07-2014<br>11-03-2016<br>01-03-2013<br>07-03-2013 |
| FR 2973441 A1 | 05-10-2012 | AUCUN | |
| EP 2290209 A2 | 02-03-2011 | BR PI1006333 A2<br>CN 102003296 A<br>EP 2290209 A2<br>JP 2011052693 A<br>US 2011054763 A1 | 24-07-2012<br>06-04-2011<br>02-03-2011<br>17-03-2011<br>03-03-2011 |
| WO 2012085443 A1 | 28-06-2012 | CN 103282626 A<br>EP 2655838 A1<br>ES 2532111 T3<br>FR 2969709 A1<br>US 2013289852 A1<br>WO 2012085443 A1 | 04-09-2013<br>30-10-2013<br>24-03-2015<br>29-06-2012<br>31-10-2013<br>28-06-2012 |
| US 2014261350 A1 | 18-09-2014 | AUCUN | |
| EP 2811140 A1 | 10-12-2014 | EP 2811140 A1<br>FR 3006375 A1 | 10-12-2014<br>05-12-2014 |
| EP 2397676 A1 | 21-12-2011 | EP 2397676 A1<br>JP 5028509 B2<br>JP 2012002123 A<br>US 2011313634 A1 | 21-12-2011<br>19-09-2012<br>05-01-2012<br>22-12-2011 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2973441